# EUROPEAN PATENT APPLICATION

(11) **EP 2 498 544 A1**
(43) Date of publication of application: **12.09.2012**
(21) Application number: 10828332.6
(22) Date of filing: 05.11.2010
(51) Int. Cl.: H04W 36/14, H04W 4/22, H04W 36/18, H04W 36/24

(54) **CONTROL STATION DEVICE, MOBILE STATION DEVICE, GATEWAY DEVICE, MOBILE COMMUNICATION SYSTEM, AND COMMUNICATION METHOD**

(30) Priority: 06.11.2009 JP 2009255436
(71) Applicant: Sharp Kabushiki Kaisha, Osaka-shi, Osaka 545-8522 (JP)
(72) Inventor: ARAMOTO Masafumi, Osaka 545-8522 (JP); NAOE, Hirokazu, Osaka 545-8522 (JP)
(74) Representative: Müller - Hoffmann & Partner
(86) International application number: PCT/JP2010/069657
(87) International publication number: WO 2011/055773

(57) **Abstract**

A control station apparatus is set with a path for performing communication of a plurality of flows with a mobile station apparatus by way of a transfer path of a first access network. When receiving a position register request for performing communication via a transfer path of a second access network, from the mobile station apparatus, the control station apparatus continues communication with the mobile station apparatus through the first access network when it has been determined that the communication requested by the position register request includes a flow for which handover of the transfer path is prohibited. As a result, a control station apparatus or the like is provided, which can perform handover control such as to enable communication of a connection including a specific flow (e.g., emergency call) via one of the access networks while performing communication of a connection that does not include any specific flow without limitation via the other access network, in accordance with the operator's policy.

## Description

### Technical Field

The present invention relates to a control station apparatus which is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, and the like.

### Background Art

Conventionally, in mobile communication systems, there have been various known techniques to control the handover of a mobile station between different networks (e.g., between a 3GPP standard network and a WLAN, or the like).

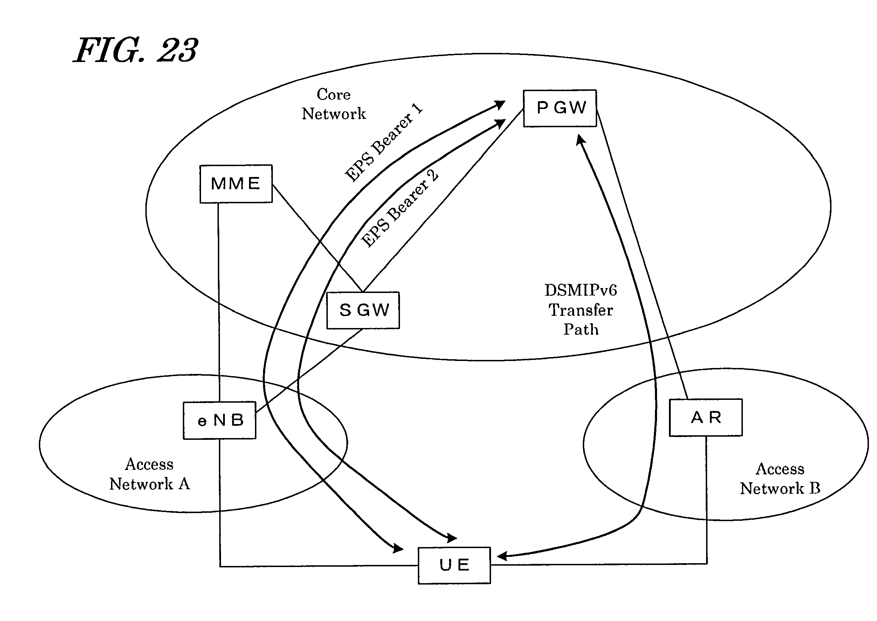

Mobile control (handover) in the conventional mobile communication networks is defined in non-patent document 1 and non-patent document 2, for example. Now, a conventional mobile communication system will be described with reference to FIG. 23. A mobile communication system in FIG. 23 is a mode of a mobile communication system described in non-patent document 1.

In the mobile communication system in FIG. 23, a plurality of access networks (access network A, access network B) are connected to a core network. A UE (User Equipment; mobile station) is also connected to the core network via an access network. The UE is connectable to the core network by way of either access network A or access network B.

Here, access network A is a communication path for which QoS can be set, for example a network defined by the 3GPP standard. Provided for access network A is an eNB (base station) to which the UE is connected. The UE is connected to the core network via the eNB and a gateway the SGW (Serving GW).

Further, a PGW (Packet Data Gateway: control station) forwarding communication data to the UE is installed in the core network. The PGW is connected to access network A via the SGW.

Further, provided for the core network is a MME (Mobility Management Entity: management station) which receives a request for transfer path establishment from the UE and takes control of the procedure of establishing an EPS bearer as a transfer path between the UE and the PGW via the eNB and the SGW. The EPS bearer is a transfer path between the UE and the PGW by way of access network A.

On the other hand, access network B is provided with an AR (Access Router) to which the UE connects, so that the UE is connected with the PGW in the core network via the AR by establishing a transfer path based on DSMIPv6 (Dual-Stack MIPv6) (see non-patent document 3 for example).

The UE is connected to the PGW by a transfer path, either the DSMIPv6 transfer path or the EPS bearer. A similar transfer path is established at a UE at the other communication end, so that communication between the UEs are performed using respective communication paths via the PGW.

Non-patent document 2 defines a handover procedure as to a case in which the communication that has been transmitted and received by UE through the transfer path of the bearer via access network A is switched to the DSMIPv 6 transfer path to continue the communication.

### Prior Art Documents

### Non-Patent Documents

Non-Patent Document 1: TS23.402 Architecture enhancements for non-3GPP accesses
Non-Patent Document 2: TS23.401 General Packet Radio Service (GPRS) enhancements for Evolved Universal Terrestrial Radio Access Network (E-UT RAN) access
Non-Patent Document 3: Mobile IPv6 Support for Dual Stack Hosts and Routers, draft-ietf-next-nemo-v4traversal-05.txt

### Summary of the Invention

### Problems to be solved by the Invention

In the conventional mobile communication system (packet communication system) defined by non-patent document 1, it is possible to transmit/receive voice communication data. Further, in the voice communication, emergency call communication is supported.

An emergency call is presumed to be used at the time of emergency and at the time of disaster, and the operator is demanded to provide service, giving the highest priority to emergency call communication so as not to degrade the quality and interrupt the communication.

For this purpose, in the prior art the network operator used to limit general calls when enormous amounts of communication arise, for example at the time of disaster, so as to enable communication of as many emergency calls as possible. This means occurrence of a state in which other communications of UEs are not permitted in order to give priority to emergency calls in the communication inside the core network.

Even under such circumstances, if a network operator having a core network to which a plurality of radio access networks (e. g. , radio access networkAand radio access network B) connect, can operate its communication so as to direct communication for emergency calls to be performed via radio access network A that can assure communication paths of communication quality and direct communication other than these to be performed via communication paths based on radio access network B, in the conventional network the network operator can provide communication service by concentrating communication for emergency calls on the one access system while performing quality control in order to allow as many emergency calls as possible and can also provide communication without limiting general calls on the other access system.

However, in the prior art, communication based on a single IP address is identified as one connection, and it is necessary to perform communication of a plurality of communication flows within the single connection. Further, an emergency call and a general call are handled as different flows in a single connection.

Further, handover for switching radio access systems has to be performed for each connection as a unit. That is, the UE transmits a handover request by designating a connection. Here, the management apparatus in the core network that receives the handover request could only reject or permit the handover as a single connection without discrimination between emergency and general calls. Therefore, there has been a problem that the operator cannot manage communication by distributing emergency call communication and general call communication to different access networks.

In view of the problems described above, it is therefore an object of the present invention to provide a control station apparatus or the like that performs handover control in accordance with the operator's policy so that communication as to a connection including a specific flow (e.g., emergency call) can be performed by a communication path via one of access networks while communication of a connection that does not include any specific flow can be performed by the other access network without any restriction on the communication .

### Means for Solving the Problems

In view of the above problems, a control station apparatus of the present invention is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, includes: a handover determining means for determining whether the communication with the mobile station apparatus includes a flow for which handover of the transfer path is prohibited; and, a position register request receiving means for receiving a position register request for performing communication via the transfer path of the second access network, from the mobile station apparatus, and is characterized in that when the handover determining means determines that the communication requested by the position register request includes a flow for which handover of the transfer path is prohibited, communication with the mobile station apparatus is continued through the first access network.

The control station apparatus of the present invention further includes a position register response transmitting means for transmitting a position register response that indicates the feasibility of position registering, to the mobile station apparatus, based on the position register request received by the position register request receiving means, wherein the position register response includes information that prohibition of handover of transfer path has been decided by the handover determining means.

The control station apparatus of the present invention is characterized in that when the handover determining means determines that the communication requested by the position register request does not include any flow for which handover of the transfer path is prohibited, communication is switched to the second access network, and the position register response includes information on a flow for which handover of transfer path is prohibited by the handover determining means.

A mobile station apparatus of the present invention is a mobile station apparatus connectable to, a first access network in which a bearer transfer path that guarantees a predetermined QoS has been established, and a second access network in which a transfer path different from the first access network has been established, and set with a path for performing communication of a plurality of flows with a control station by way of the transfer path of the first access network, includes: a position register request transmitting means for transmitting a position register request for performing communication via the transfer path of the second access network; a position register response receiving means for receiving a position register response that indicates the feasibility of position registering, based on the position register request, from the control station apparatus; and, a transfer path switching means for switching the transfer path of the communication with the control station apparatus, based on the position register response received by the position register response receiving means, and is characterized in that the transfer path switching means continues communication by way of the first access network when the position register response includes information that handover of transfer path is prohibited.

A gateway apparatus of the present invention is a gateway apparatus which connects a mobile station apparatus connectable to, a first access network in which a bearer transfer path that guarantees a predetermined QoS has been established, and a second access network in which a transfer path different from the first access network has been established, with a control station apparatus which is set with a path for performing communication of a plurality of flows with the mobile station apparatus by way of the transfer path of the first access network, by way of the transfer path of the second access network, and includes: a position register response receiving means for receiving a position register response that includes information that prohibition of handover of transfer path has been decided, from the control station apparatus through a transfer path of a third access network; and, a position register response transmitting means for transmitting the position register response to the mobile station apparatus, by way of the transfer path of the second access network.

Amobile communication system of the present invention is a mobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, and is characterized in that the control station apparatus includes: a handover determining means for determining whether the communication with the mobile station apparatus includes a flow for which handover of the transfer path is prohibited; and, a position register request receiving means for receiving a position register request for performing communication via the transfer path of the second access network, from the mobile station apparatus, and when the handover determining means determines that the communication requested by the position register request includes a flow for which handover of the transfer path is prohibited, communication with the mobile station apparatus is continued through the first access network.

A communication method of the present invention is a communication method in a mobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, and is characterized in that the control station apparatus determines whether the communication with the mobile station apparatus includes a flow for which handover of the transfer path is prohibited, receives a position register request for performing communication via the transfer path of the second access network, from the mobile station apparatus, and continues communication with the mobile station apparatus through the first access network when it has been determined that the communication requested by the position register request includes a flow for which handover of the transfer path is prohibited.

### Effect of the Invention

According to the present invention, a control station apparatus or the like which is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, receives a position register request for performing communication via the transfer path of the second access network, from the mobile station apparatus, and continues communication with the mobile station apparatus through the first access network when it has been determined that the communication requested by the position register request includes a flow for which handover of the transfer path is prohibited.

Accordingly, it becomes possible to continue communication including an emergency call through a bearer transfer path with QoS guaranteed when the network operator takes a policy of prohibiting handover of transfer path, for communication including an emergency call.

### Brief Description of the Drawings

[FIG. 1] is a diagram for illustrating an overall mobile communication system in the first embodiment.
[FIG. 2] is a diagram for illustrating a functional configuration of a UE in the first embodiment.
[FIG. 3] is a diagram for illustrating one example of data configurations in a connection management table in the first embodiment.
[FIG. 4] is a diagram for illustrating a functional configuration of a PGW in the first embodiment.
[FIG. 5] is a diagram for illustrating one example of data configurations in a handover policy management table in the first embodiment.
[FIG. 6] is a diagram for illustrating the flow of a communication path establishing procedure in the first embodiment.
[FIG. 7] is a diagram for illustrating a handover procedure in the first embodiment.
[FIG. 8] is a flow chart for illustrating a handover feasibility decision process in the first embodiment.
[FIG. 9] is a diagram for illustrating a procedure entailing a handover feasibility decision process in the first embodiment.
[FIG. 10] is a diagram for illustrating an overall mobile communication system in the second embodiment.
[FIG. 11] is a diagram for illustrating a functional configuration of a UE in the second embodiment.
[FIG. 12] is a diagram for illustrating one example of data configurations in a connection management table in the second embodiment.
[FIG. 13] is a diagram for illustrating a functional configuration of a PGW in the second embodiment.
[FIG. 14] is a diagram for illustrating a functional configuration of a GW in the second embodiment.
[FIG. 15] is a diagram for illustrating a handover procedure in the second embodiment.
[FIG. 16] is a diagram for illustrating a procedure entailing a handover feasibility decision process in the second embodiment.
[FIG. 17] is a diagram for illustrating an overall mobile communication system in the third embodiment.
[FIG. 18] is a diagram for illustrating a functional configuration of a UE in the third embodiment.
[FIG. 19] is a diagram for illustrating one example of data configurations in a connection management table in the third embodiment.
[FIG. 20] is a diagram for illustrating a functional configuration of a GW in the third embodiment.
[FIG. 21] is a diagram for illustrating a handover procedure in the third embodiment.
[FIG. 22] is a diagram for illustrating a procedure entailing a handover feasibility decision process in the third embodiment.
[FIG. 23] is a diagram for illustrating an overall mobile communication system in the prior art.

### Mode for Carrying Out the Invention

Next, the best mode for carrying out the present invention will be described with reference to the drawings. The present embodiment will be described in detail using drawings, taking an example of a mobile communication system to which the present invention is applied.

### [1. The first embodiment]

To being with, the first will be described.

### [1.1 Network Configuration]

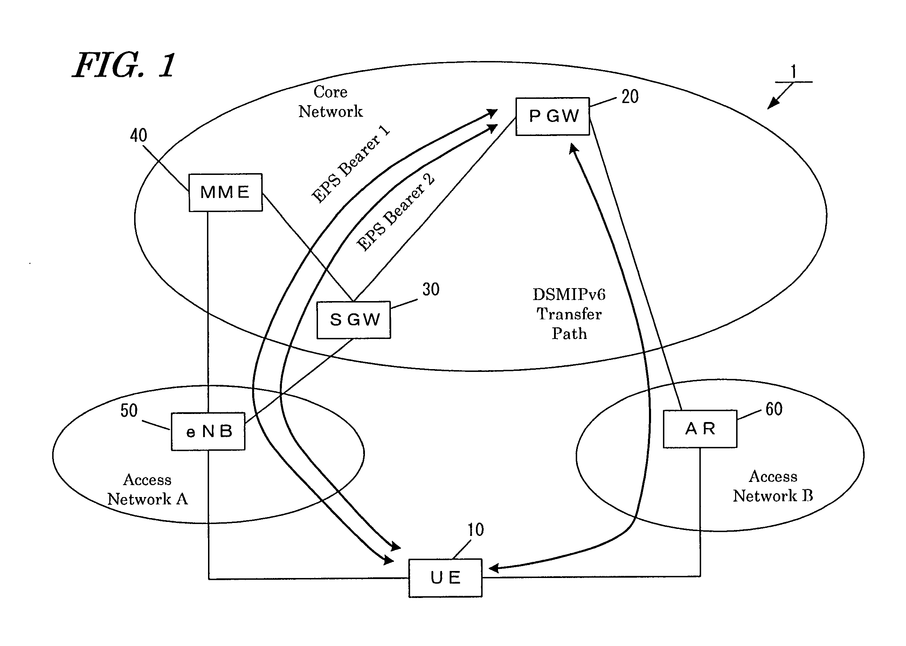

To begin with, the network configuration in the present embodiment will be described with reference to FIG. 1. FIG. 1 is a diagram for illustrating the overall scheme of a mobile communication system 1 when the present invention is applied. As shown in this figure, in the mobile communication system 1, an access network A and an access network B are connected to a core network. Here, access network A and access network B are assumed to be different networks; for example, access network A is assumed to be a 3GPP standardized network while access network B is assumed to be a non-3GPP network (e.g., DSMIPv6) as an example.

First, a UE 10 (mobile station: User Equipment) is connected to the core network via a plurality of radio access networks. Access network A includes a base station (eNB 50) to which UE 10 connects and is connected to the core network via a gateway (SGW 30).

The core network is installed with a GW (PGW 20) that forwards communication data transmitted from other mobile stations to a mobile station and is connected to SGW 30. Further, the core network is installed with a management apparatus (MME 40) that receives a request for transfer path establishment from UE 10 and takes control of the procedure for establishing a bearer (EPS bearer) as a transfer path between UE 10 and PGW 20 via eNB 50 and SGW 30. The EPS bearer is a QoS-supporting transfer path between UE 10 and PGW 20 by way of access network A.

Access network B is installed with an access router (AR 60) to which UE 10 connects, so that UE 10 is connected with PGW 20 in the core network via AR 60 by establishing a transfer path based on DSMIPv6.

Access network A is, for example a LTE (Long Term Evolution) as a radio access network that is defined by 3GPP as a communication standardization organization for mobile phone networks. Access network B is an access network such as a radio LAN, WiMAX or the like. Further, the core network is based on SAE (System Architecture Evolution) defined by 3GPP, described in non-patent document 1.

As above, in the mobile communication system using packet communication in the present embodiment, UE 10 is connected to the core network by the transfer path of the bearer that supports QoS via access network A and by the transfer path based on DSMIPv6 via access network B.

### [1.2. Equipment Configurations]

Subsequently, each apparatus configuration will be described with reference to the drawings. Here, SGW 30, MME 40, eNB 50 and AR 60 have the same configurations as those of the conventional equipment in SAE, so that detailed description is omitted.

### [1.2.1 UE Configuration]

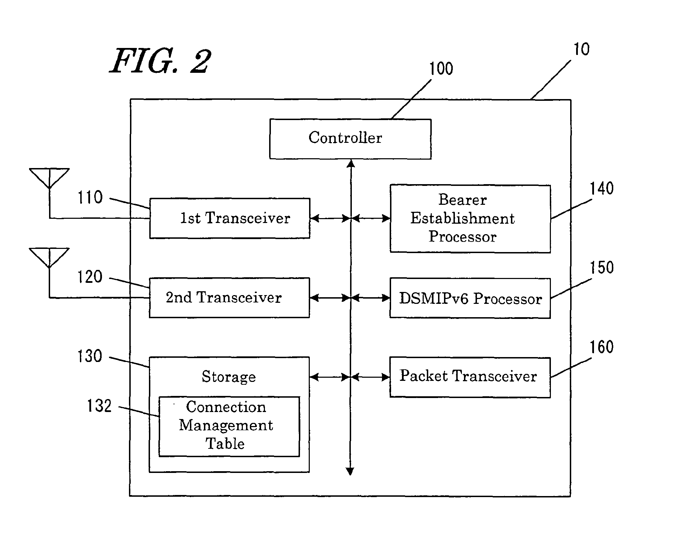

First, the configuration of UE 10 as a mobile station apparatus will be described using a block diagram in FIG. 2. Here, as a specific example of UE 10, a terminal such as mobile terminal, PDA or the like, which simultaneously connects to the core network via a plurality of access networks, is supposed.

As shown in FIG. 2, UE 10 includes a controller 100, to which a first transceiver 110, a second transceiver 120, a storage 130, a bearer establishment processor 140, a DSMIPv6 processor 150 and a packet transceiver 160 are connected.

Controller 100 is a functional unit for controlling UE 10. Controller 100 reads out and executes various programs stored in storage 130 to realize different processes.

First transceiver 110 and second transceiver 120 are functional units for enabling UE 10 to access each access network. First transceiver 110 is the functional unit for connection to access network A and second transceiver 120 is the functional unit for connection to access network B. Connected to first transceiver 110 and second transceiver 120 are external antennas, respectively.

Storage 130 is a functional unit for storing programs, data, etc., necessary for UE 10 to perform various kinds of operations. Storage 130 further stores a connection management table 132 for storing connections in association with transfer paths for transmission. This connection management table 132 is referred to when packet transceiver 160 transmits data so as to select a transfer path for each connection, whereby the data is transmitted from the transceiver corresponding to the selected transfer path.

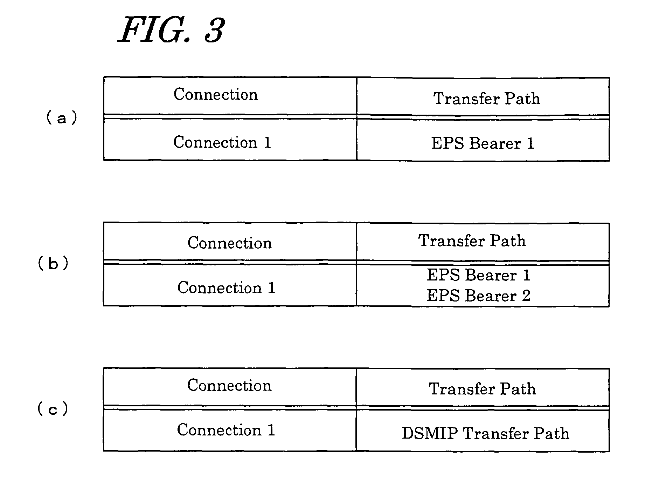

Here, FIG.3(a) shows one data configuration example of connection management table 132. As shown in FIG.3(a), a connection (e.g., "connection 1)" is stored in association with a transfer path (e.g., "EPS bearer 1").

Bearer establishment processor 140 is a functional unit that executes a process for establishing an EPS bearer as a communication path to PGW 20 via access network A, by way of SGW 30.

DSMIPv6 processor 150 is a functional unit for establishing a transfer path based on DSMIPv6 to connect to the core network via access network B. Packet transceiver 160 is a functional unit that transmits and receives specific data (packets). The unit decomposes the data received from the upper layer into packets and transmit them. The unit also realizes a function of transferring received packets to the upper layer.

### [1.2.2 PGW Configuration]

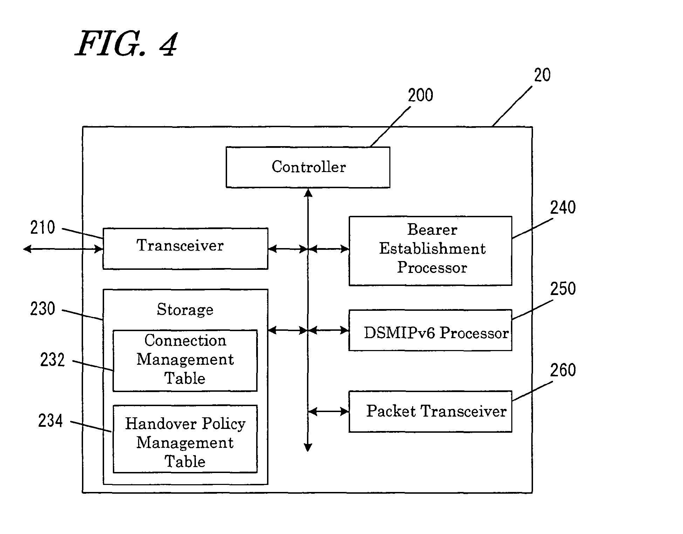

Next, the configuration of PGW 20 in the present embodiment will be described based on the block diagram of FIG. 4. PGW 20 includes a controller 200, to which a transceiver 210, a storage 230, a bearer establishment processor 240, a DSMIPv6 processor 250 and a packet transceiver 260 are connected.

Controller 200 is a functional unit for controlling PGW20. Controller 200 reads out and executes various programs stored in storage 230 to realize processes.

Transceiver 210 is a functional unit that is wired to a router or a switch to transmit and receive packets. For example, this unit performs transmission and reception using Ethernet (registered trademark) or the like that is usually used as a network connecting system.

Storage 230 is a functional unit for storing programs, data, etc., necessary for PGW 20 to execute various operations. Storage 230 further stores a connection management table 232 for storing connections in association with transfer paths for transmission and a handover policy management table 234 that defines operator's handover policy. Connection management table 232 is referred to when packet transceiver 260 transmits data so as to select a transfer path for each connection, whereby the data will be transmitted from the transceiver corresponding to the selected transfer path.

Here, FIG. 3(a) shows one data configuration example of connection management table 232. As shown in FIG.3(a), a connection (e.g., "connection 1)" is stored in association with a transfer path (e.g., "EPS bearer 1"). That is, the connection management table stored in each apparatus is synchronized with the others, or the same table is stored. That is, connection management table 232 and connection management table 132 are an identical management table.

Handover policy management table 234 is a management table for associating a specific flow with an access network (transfer path) for permitting transmission/reception of communication data corresponding to that flow.

The flow herein is a communication that can be identified by flow identification information (e.g., "flow 1 (TFT1 Flow ID1)") and can be associated with an application or the like As the flow identification information, a TFT (Traffic Flow Template) composed of an IP address, a port number and a protocol number and the like can be used. It is also possible to use flow IDs as the flow identification information when UE 10 and PGW 20 have shared flow IDs for identifying TFTs in advance.

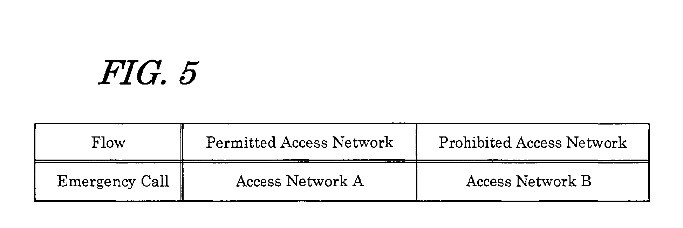

FIG. 5 shows one data configuration example of handover policy management table 234. As shown in FIG. 5, an application (e.g., "emergency call") is associated with an access network that permits or prohibits communication of the application (e.g., "access network A" as a permitting network and "access network B" as a prohibiting network).

Here, the application may be identified as a specific flow based on the aforementioned flow identification information, or may be identified based on existing QoS information such as ARP (Allocation and Retention Priority) or the like that represents priority of the communication, not limited to the flow identification information. Accordingly, it is possible in handover policy management table 234 to control permission/prohibition of communication access in accordance with the flow identification information or control permission/prohibition of communication access in accordance with the QoS level.

PGW 20 has held correlation of TFTs and/or ARPs with applications beforehand. Accordingly, it is possible to solve if an application corresponds to an emergency call, using TFTs and/or ARPs held in handover policy management table 234.

Further, though the present embodiment is described taking an example in which handover policy management table 234 that reflects the operator's policy has been configured in advance in PGW 20, the operator' s policy may be dynamically configured in PGW 20 by information notice from an external apparatus (e.g., PCRF (Policy and Charging Rules Function) or the like), not limited to the above.

Bearer establishment processor 240 is a functional unit that executes a process for establishing an EPS bearer as a communication path to UE 10 via access network A, by way of SGW 30.

DSMIPv6 processor 250 is a functional unit for establishing a transfer path based on DSMIPv6 to connect to UE 10 via access network B. Packet transceiver 260 is a functional unit that transmits and receives specific data (packets).

### [1.3. Communication Path Establishment Procedure]

Next, in the network shown in FIG. 1, the connecting procedure for UE 10 to connect to the core network via access network A will be described.

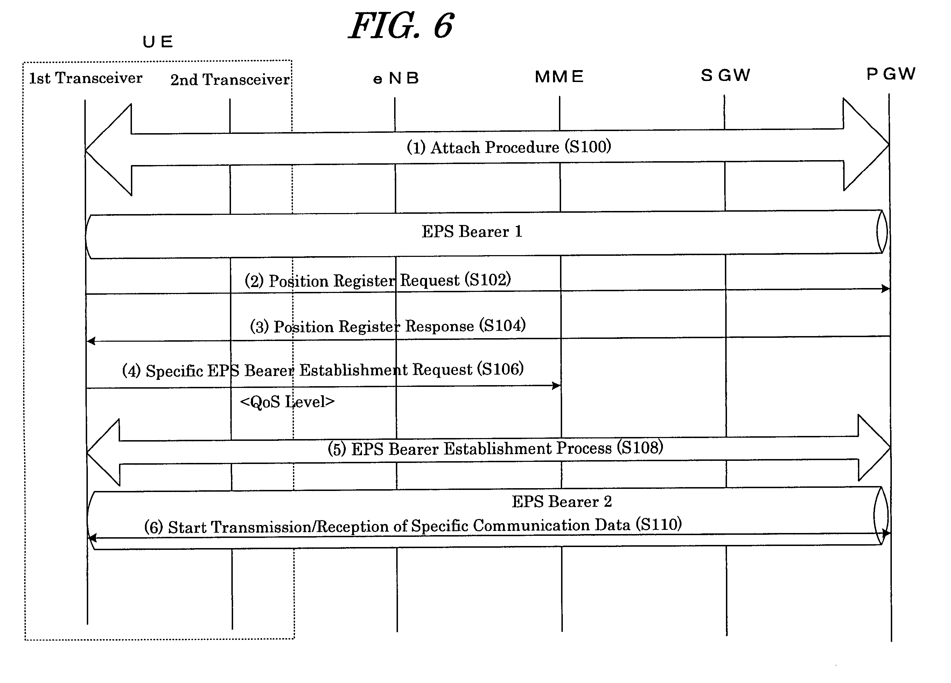

To begin with, the steps of connecting to the core network via access network A will be described using FIG. 6.

(1) UE 10 performs an attach procedure, following the conventional method (S100). Specifically, UE 10 transmits an attach request to MME 40. The attach request includes the identification information of UE 10 to have UE 10 authorized and permitted to access. This also includes an access point name (APN) for identifying PGW 20 to be connected. Further, the access point name (APN) selects PGW 20 and also corresponds to the service UE 10 requests. For example, UE 10 performs an attach procedure, using an access point name corresponding to a voice communication service.

MME 40 having received the attach request executes processes of authentication and access permission by the procedures with UE 10 and eNB 50, following the conventional method. MME 40 performs authentication and gives access permission based on the subscriber identification information etc. of UE 10 included in the attach information.

MME 40 executes a process of establishing a default EPS bearer (EPS bearer 1) for UE 10 that was permitted to access. The procedure is performed following the conventional procedure, by transmitting/receiving control messages between UE 10, eNB 50, MME 40, SGW 30 and PGW 20.

MME 40 having received the attach request transmits a default EPS bearer establishment request to PGW 20. PGW 20, as receiving the default EPS bearer establishment request, executes a process of establishing an EPS bearer (EPS bearer 1). Here, the default EPS bearer is a transfer path that is not the one which satisfies the QoS level required by the communication data of a particular application but is the one which enables communication between UE 10 and PGW 20.

(2) After establishment of the default EPS bearer (EPS bearer 1), UE 10 transmits a position register request based on DSMIPv6 to PGW 20 (S102). The message includes the identification information of UE 10, HoA (Home Address) of UE 10 and CoA (Care-of-Address) as positional information.

(3) PGW 20 transmits a position register response to UE 10 to complete the position registering process of DSMIPv6 (S104) .

Herein, as defined in the conventional SAE, if the connection via access network A is a connection to the home link based on DSMIPv6, the position register procedure of DSMIPv6 described at (2) and (3) in FIG. 6 may be omitted.

Thereafter, UE 10 establishes a specific EPS bearer (EPS bearer 2) as a transmission path supporting the QoS for performing a voice call via access network A. The specific EPS bearer is a transfer path that enables communication between UE 10 and PGW 20 and is a transfer path that guarantees the QoS level required by UE 10.

(4) After establishment of the default EPS bearer, UE 10 transmits a specific EPS bearer establishment request to MME 40 in order to establish a communication path for performing a specific communication (S106).

Here, the specific EPS bearer establishment request message includes information representing QoS level. This request from UE 10 is a request for establishing a specific EPS bearer for making an emergency call, for example, and is not made in link with the completion of the position register process DSMIPv6 after establishment of the default EPS bearer, but transmission of this request is triggered when the user makes an emergency call or at other occasions.

(5) MME 40 receives the specific bearer establishment request from UE 10 and executes an establishment process of a specific EPS bearer (EPS bearer 2) (S108). The procedure is performed following the conventional process by transmitting the specific EPS bearer establishment request from MME 40 to PGW 20, followed by transmission and reception of control messages between UE 10, eNB 50, MME 40, SGW 30 and PGW 20 to execute an EPS bearer establishment process. The specific EPS bearer is a transfer path that guarantees the QoS level required by the specific connection UE 10 requests and enables communication between UE 10 and PGW 20.

(6) Then, PGW 20 and UE 10 start transmission and reception of communication data of an emergency call through the established specific EPS bearer (S110). The communication data of this voice call can be communicated with the QoS quality maintained without distinction of an emergency call from general calls other than that.

Further, it is possible for UE 10 to establish a specific EPS bearer in the same manner, not limited for an emergency call but for a communication that needs specific quality. Accordingly, UE 10 can establish a plurality of specific EPS bearers for connections. For example, the EPS bearer for an emergency call and the EPS bearer for a general call can be established separately.

Further, UE 10 can perform communication using the default EPS bearer (EPS bearer 1) as a transfer path, for a communication that does not need a specific quality.

Accordingly, communication such as, for example, a WEB access and the like can be performed using EPS bearer 1 as the transfer path while communication for an emergency call can be performed using EPS bearer 2 as the transfer path. UE 10 further establishes a specific EPS bearer (e.g., EPS bearer 3) so that communication of general calls other than emergency calls can be performed using EPS bearer 3 as the transfer path.

At this point, UE 10 performs communication using the IP address obtained by the above procedure. In UE 10 and the core network, communication based on a single IP address is handled as one connection, so that UE 10 creates one connection by acquiring one IP address by the above attach procedure.

Here, the connection created by the above attach procedure is named connection 1. UE 10 and PGW 20 can establish a plurality of EPS bearers for connection 1, and connection management table 132 associate the connection with the EPS bearers to manage. When EPS bearer 2 has been established for an emergency call, establishment of two bearers, "EPS bearer 1 and EPS bearer 2", is managed as shown in FIG. 3 (b) .

When no specific EPS bearer is established, establishment of "EPS bearer 1" for "connection 1" is managed as shown in FIG. 3(a).

### [1.4. Handover Procedure]

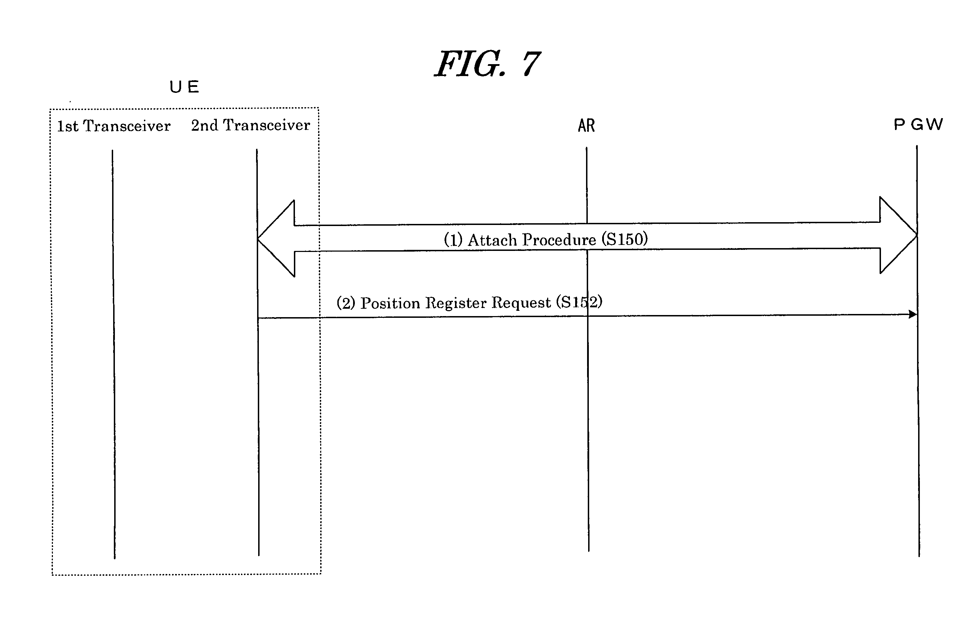

Subsequently, the procedure of a case where UE 10 hands over connection 1 from access network A to access network B will be described with reference to FIGS. 7 to 9. In this case, UE 10 uses second transceiver 120 connecting to access network B to transmit and receive control information to achieve the procedure. Description will be given first with reference to FIG. 7.

(1) First, UE 10 performs an attach procedure via access network B (S150) . The attach procedure is performed by the conventional connecting procedure based on DSMIPv6.

As a specific example, UE 10 first performs an authentication procedure for acquiring a local IP address from access network B. The procedure is executed by the combination of the procedure between UE 10 and AR 60 and the procedure between AR 60 and PGW 20. AR 60 is installed in the coverage area for UE 10, and is the AR that UE 10 connects. PGW 20 is an entity that is selected based on the information previously held by UE 10. Authentication and access permission processes are performed by PGW 20 or AR 60, using the profiles such as the identification information of UE 10, the subscriber data, etc., based on the operator' s policy.

Then, the UE 10 that has been authorized and permitted to access is assigned a local IP address by AR 60. The assigned local IP address is an IPv4 or IPv6 address, and is used as CoA (Care-of-Address) of DSMIPv6. The method of assignment is implemented based on DHCP that is widely used on the Internet or based on a stateless IP address assignment procedure.

A setup process for establishing security association for transmitting/receiving encrypted DSMIPv6 control messages between UE 10 and PGW 20 is implemented. This process is performed based on IKEv2, EAP or the like, following the conventional DSMIPv6 technique.

At this step, PGW 20 gives notice of an IPv6 Address or IPv6 network prefix to UE 10. UE 10 sets the assigned IPv6 address as HoA (Home Address). When a network prefix is assigned, HoA is generated based on that network prefix. By this procedure, UE 10 becomes able to perform a position registering process in safety, to PGW 20, using an encrypted control message.

(2) UE 10 transmits aposition register requestdefined in DSMIPv6 to PGW 20 (S152). The message includes the identification information of UE 10, HoA of UE 10 and CoA as positional information. In the attach procedure at S150, it is also permitted not to perform address assignment. In this case, UE 10 can make a request for assignment of HoA, based on DSMIPv6 by this message.

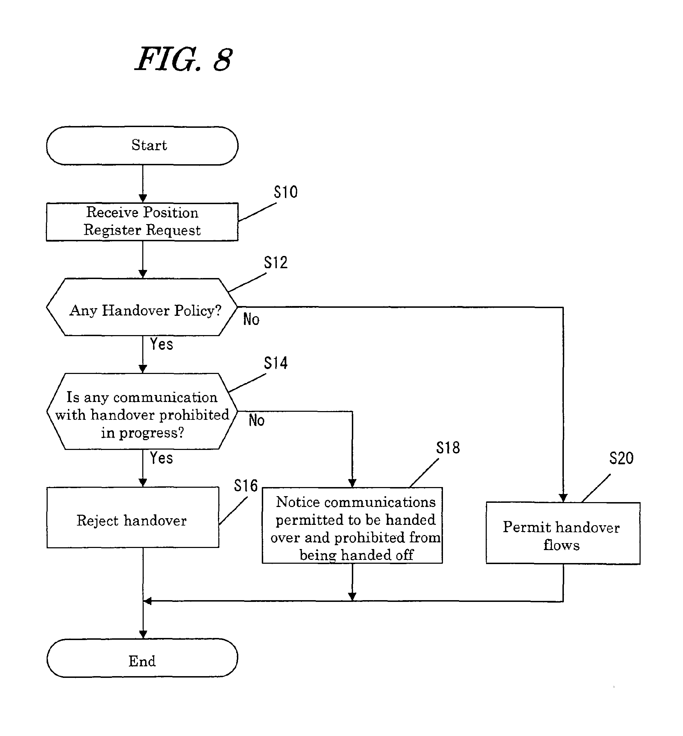

PGW 20 having received the position register request determines the feasibility of handover and transmits a position register response to UE 10. The determination of Hanover feasibility is performed by the handover feasibility decision process shown in FIG. 8, for example.

First, PGW 20 receives a position register request (Step S10). PGW 20 then refers to handover policy management table 234 to check the presence of a handover policy as to whether handover for a specific communication should be performed (Step S12). Here, examples of handover policy may include prohibition of handover to access network B for emergency call communication.

The operator can hold handover policy by dynamically updating handover policy management table 234 considering the network traffic and communication conditions. Herein, a handover policy that emergency call communication should be prohibited via access network B is held.

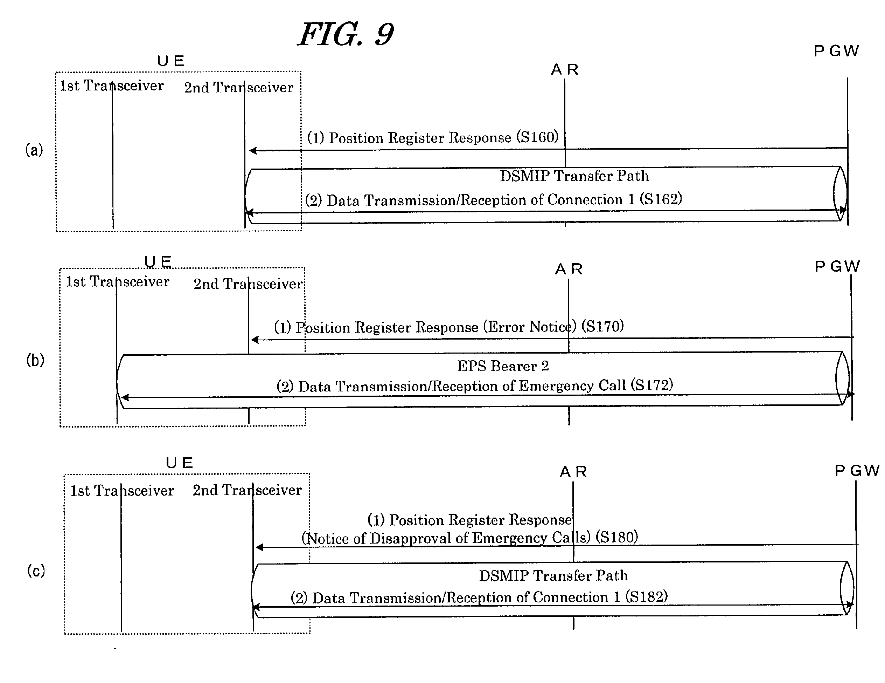

When there is no handover policy (Step S12; No), PGW 20 transmits a position register response to UE 10 as has been conventionally done to permit handover (Step S20). The procedure in this case will be described with FIG. 9(a).

(1) PGW 20 transmits a position register response to UE 10 (S160). The position register response indicates permission of handover of all the communications of connection 1 as has been conventionally done.

(2) UE 10 and PGW 20 continue data transmission and reception by switching the communication of connection 1 to the DSMIP transfer path (S162). In this case, UE 10 updates connection management table 132 so that the transfer path for "connection 1" is switched to the "DSMIP transfer path" as shown in FIG. 3(c). Similarly, PGW 20 updates connection management table 232 so that the transfer path for "connection 1" is switched to the "DSMIP transfer path" as shown in FIG. 3(c).

Returning to FIG. 8, when there is a handover policy at Step S12 (Step S12; Yes), PGW 20 checks whether, in the communication by the connection for which handover is requested, a prohibited communication is being performed (Step S14). For example, when handover of connection 1 is requested, PGW 20 refers to the communication for which handover is prohibited in handover policy management table 234, and resultantly detects the fact that an emergency call is prohibited and determines whether communication of a flow that identifies an emergency call is being performed.

In order to determine whether communication of an emergency call is in progress, it is also possible to confirm it by checking the fact that the EPS bearer for an emergency call (EPS bearer 2) has been established, or it is possible to confirm that communication of an emergency call is in progress by monitoring the actual traffic based on the flow identification information that identifies an emergency call. Without regard to an emergency call, it is also possible to determine whether communication of a flow to be prohibited from being handed off is being performed, using the same technique.

When a communication that is prohibited from being handed off is in progress (Step S14; Yes), PGW 20 notifies UE 10 of the rejection to the handover (Step S16). The procedure in this case will be described with FIG. 9(b).

(1) PGW 20 transmits a position register response to UE 10 to notify rejection of handover (S170). Since the request is a handover request for a connection including a communication prohibited from being handed off, an "error notice" that means rejection of handover is added as an information factor in the position register response.

(2) UE 10 and PGW 20 continue transmission and reception of communication data through the EPS bearers before the handover request is made (S172). For example, communication of an emergency call is continued using EPS bearer 2 as the transfer path while the other communication is continued through EPS bearer 1 or another EPS bearer.

Returning to FIG. 8, when no communication that is prohibited from being handed off is in progress (Step S14; No), PGW 20 gives a notice of handover permission to UE 10 and notifies information as to communication to be prohibited from being handed off (Step S18) The flow in this case will be described with FIG. 9(c).

(1) PGW 20 transmits a position register response to notify handover permission (S180). Here, as an information factor in the position register response, information on the communication to be prohibited from being handed off is added. For example, it is notified that communication of an emergency call will not be performed through the DSMIP transfer path from this time on.

(2) UE 10 and PGW 20 continue transmission and reception of data of connection 1 by switching the communication path to the DSMIP transfer path (S182) . Here, when UE 10 starts communication that is prohibited from being handed off from this time on, the UE will not make a request for communication using the DSMIP transfer path. The UE performs communication in a procedure that does not use the DSMIP transfer path as a transfer path, by such a means as to establish another new connection via access network A.

As described above, even when emergency calls are prohibited in the access network to which handover is performed, handover of general calls other than emergency call communication is made possible, though in the conventional handover, it was only possible to reject the handover of all the connections including general calls. Further, determination of handover can be made based on the operator' s policy inside the core network.

With the arrangement, by applying the operator's policy to the management apparatus in the core network, it become possible to make such operation that communication for emergency calls will be performed through access network A alone. This configuration is able to deal with the policy of an operator who schemes such operation as to have the communication for emergency calls performed via access network A and have the communication via access network B used for communication for general calls other than emergency calls, even though the communication path via access network B can, indeed, keep the quality for emergency call communication and permit handover from the communication path via access network A.

That is, the network operator is able to control handover permission/permission for every flow or every bearer, in response to handover requests frommobile station apparatus, in accordance with the operator's policy depending on the communication conditions within the network.

Though the present embodiment was described by assuming an emergency call as a specific communication to be prohibited from being handed off, the operator can define the specific communication in any form, not limited to the above. Further, the specific communication for which handover is prohibited is not limited to one, but a plurality of communication can be specified.

### [2 The Second Embodiment]

Next, the second embodiment will be described in detail using diagrams.

### [2.1 Network Configuration]

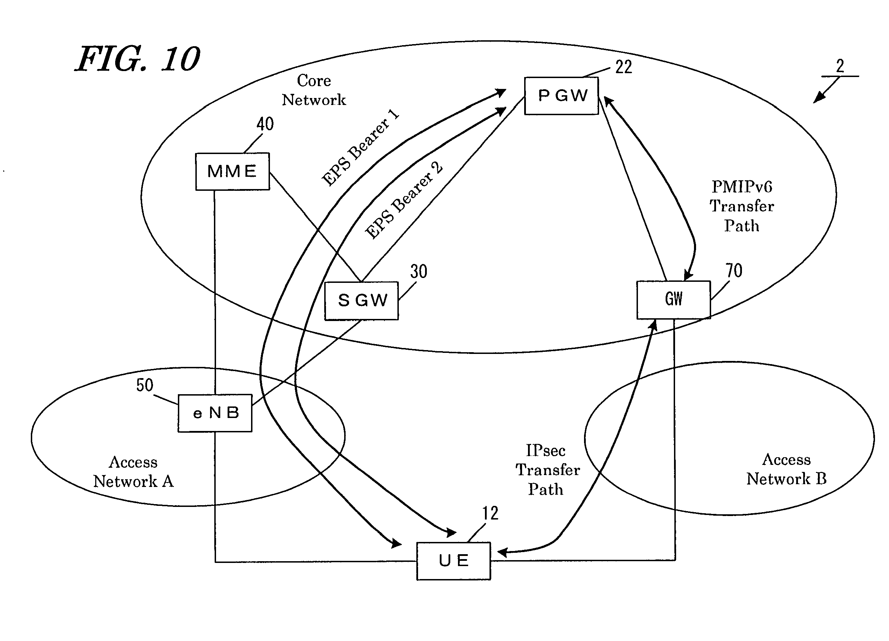

To begin with, the network configuration in the present embodiment will be described with reference to FIG. 10. FIG. 10 is a diagram for illustrating the overall scheme of a mobile communication system 2 when the present invention is applied. As shown in this figure, in the mobile communication system, an access network A and an access network B are connected to a core network. Here, access network A and access network B are assumed to be different networks; for example, access network A is assumed to be a 3GPP standardized network while access network B is assumed to be a non-3GPP network as an example.

The difference from the first embodiment is that the transfer path is established based on PMIPv6 in the present embodiment, in contrast to that access network B establishes the transfer path based on DSMIPv6 in the first embodiment.

This is attributed to the difference between mobility control techniques. In DSMIPv6 in the first embodiment, mobility control is carried out by the UE and PGW. In contrast to this, in PMIPv6 of the present embodiment, a GW inside the network performs the mobility control function of a UE, instead of the UE 12. Because of this proxy function, this mobility control function has been conventionally known as Proxy Mobile IPv6 (PMIPv6). This proxy function makes the UE become unnecessary to have a mobility control function, hence has the advantage of alleviating the processing load.

First, a UE 12 (mobile station: User Equipment) is connected to the core network via a plurality of radio access networks. Access network A includes a base station (eNB 50) to which UE 12 connects and is connected to the core network via a gateway (SGW 30).

The core network is installed with a GW (PGW 22) that forwards communication data transmitted from other mobile stations to a mobile station and is connected to SGW 30. Further, the core network is installed with a management apparatus (MME 40) that receives a request for transfer path establishment from UE 12 and takes control of the procedure for establishing a bearer (EPS bearer) as a transfer path between UE 12 and PGW 22 via eNB 50 and SGW 30. The EPS bearer is a QoS-supporting transfer path between UE 12 and PGW 22 by way of access network A.

Access network B is connected to the core network via a GW 70. Here, GW 70 that connects access network B with the core network is an apparatus inside the core network. UE 12 is connected with PGW 22 by a transfer path based on IPsec established between UE 12 and GW 70 and a transfer path based on PMIPv6 established between GW 70 and PGW 22.

Access network A is, for example a LTE (Long Term Evolution) as a radio access network that is defined by 3GPP as a communication standardization organization for mobile phone networks. Access network B is an access network such as a radio LAN, WiMAX or the like. Further, the core network is based on SAE (System Architecture Evolution) defined by 3GPP.

As above, in the mobile communication system using packet communication in the present embodiment, UE 12 is connected to the core network by the transfer path of the bearer that supports QoS via access network A and by the transfer path based on IPsec and the transfer path based on PMIPv6 via access network B.

### [2.2. Equipment Configurations]

Subsequently, each apparatus configuration will be briefly described with reference to the drawings. Here, SGW 30, MME 40 and eNB 50 have the same configurations as those of the conventional equipment in SAE, so that detailed description is omitted.

### [2.2.1 UE Configuration]

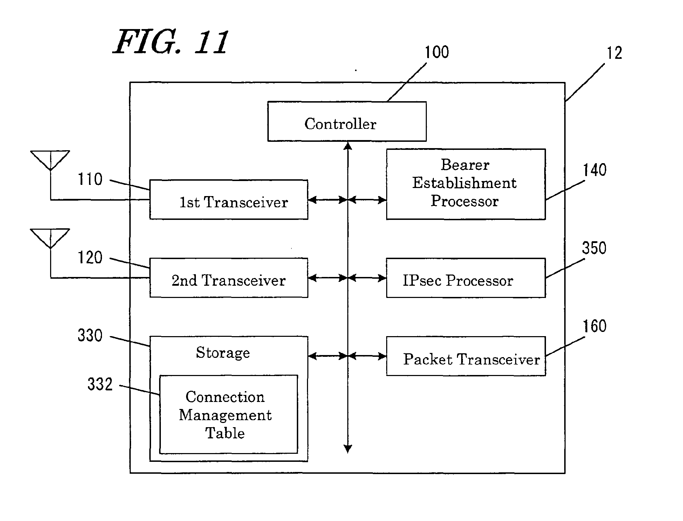

First, the configuration of UE 12 as a mobile station apparatus will be described using a block diagram in FIG. 11. Here, as a specific example of UE 12, a terminal such as mobile terminal, PDA or the like, which simultaneously connects to the core network via a pluralityof access networks, is supposed. Here, in UE 12 in FIG. 11, the same components as those in UE 10 in FIG. 2 are allotted with the same reference numerals, and description of the functional parts allotted with the same reference numerals is omitted.

As shown in FIG. 11, UE 12 includes a controller 100, to which a first transceiver 110, a second transceiver 120, a storage 330, a bearer establishment processor 140, a IPsec processor 350 and a packet transceiver 160 are connected.

Similarly to storage 130, storage 330 is a functional unit for storing programs, data, etc. , necessary for the mobile station apparatus to perform various kinds of operations. Storage 330 further stores a connection management table 332 for storing a connection with transfer paths for transmission.

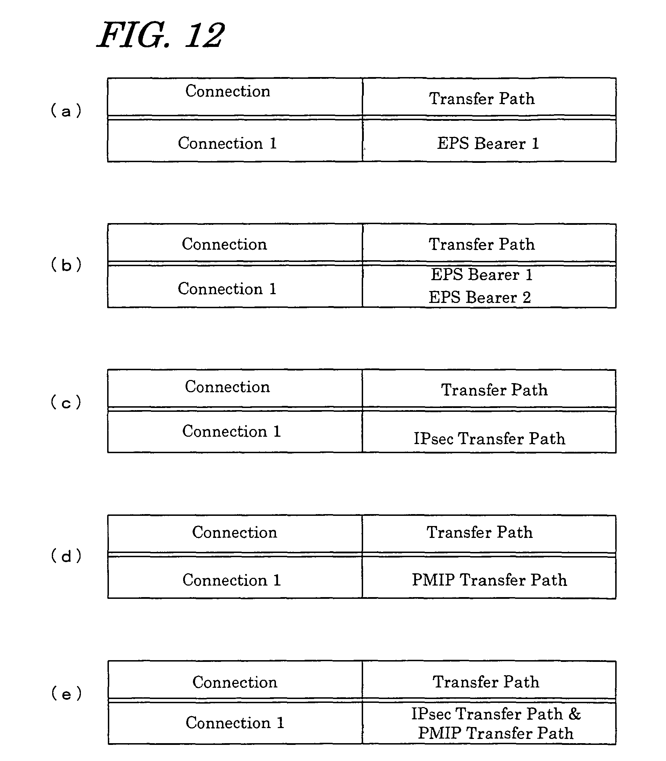

Here, FIG. 12 (a) shows one data configuration example of connection management table 332. As shown in FIG. 12 (a), in connection management table 332, a connection (e.g., "connection 1") is stored in association with a transfer path (e.g., "EPS bearer 1").

IPsec processor 350 is a functional part for establishing a transfer path based on IPsec that connects to the core network via access network B.

### [2.2.2 PGW Configuration]

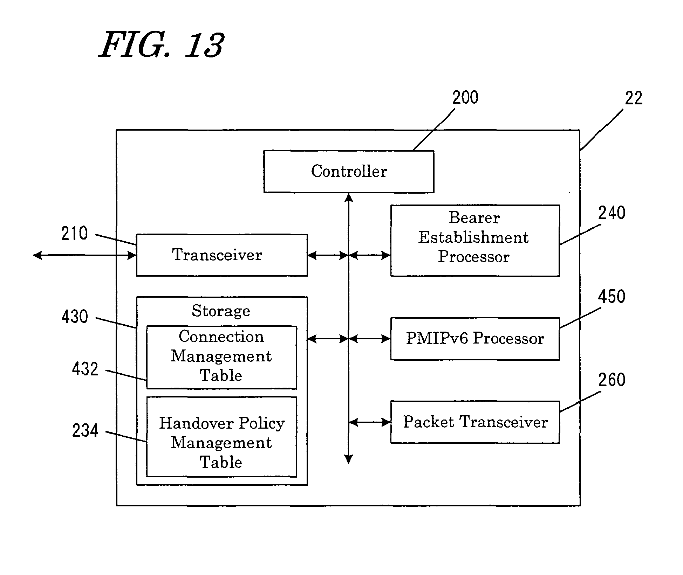

Next, the configuration of PGW 22 in the present embodiment will be described based on FIG. 13. Here, in PGW 22 in FIG. 13, the same components as those in PGW 20 in FIG. 4 are allotted with the same reference numerals, and description of the functional parts allotted with the same reference numerals is omitted.

PGW 22 includes a controller 200, to which a transceiver 210, a storage 430, a bearer establishment processor 240, a PMIPv6 processor 450 and a packet transceiver 260 are connected.

Similarly to storage 230, storage 430 is a functional unit for storing programs, data, etc., necessary for PGW 22 to execute various operations. Storage 430 further stores a connection management table 432 for storing connections in association with transfer paths for transmission and a handover policy management table 234.

Here, FIG. 12 (a) shows one data configuration example of connection management table 432. As shown in FIG. 12(a), a connection (e.g., "connection 1") is stored in association with a transfer path (e.g. , "EPS bearer 1") . This connection management table 432 is synchronized with connection management table 332 of UE 12 so that same data is stored.

PMIPv6 processor 450 is a functional unit for establishing a transfer path based on PMIPv6 to connect to UE 12 via access network B.

### [2.2.3 GW Configuration]

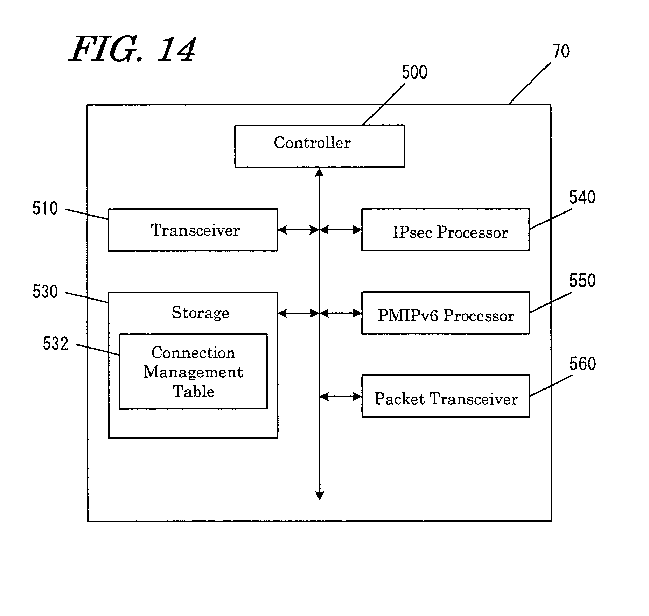

Next, the configuration of GW 70 in the present embodiments will be described based on FIG. 14. GW 70 includes a controller 500 to which a transceiver 510, a storage 530, an IPsec processor 540, a PMIPv6 processor 550 and a packet transceiver 560 are connected.

Controller 500 is a functional unit for controlling GW 70. Controller 500 reads out various programs stored in storage 530 and executes the programs to realize various processing.

Transceiver 510 is a functional unit that is wired to a router or a switch to transmit and receive packets. For example, this unit performs transmission and reception using Ethernet (registered trademark) that is usually used as a network connecting system, or the like.

Storage 530 is a functional unit for storing programs, data, etc., necessary for GW 70 to execute various operations. Storage 530 further stores a connection management table 532 for storing connections in association with transfer paths for transmission. Connection management table 532 is referred to when packet transceiver 560 transmits data so as to select a transfer path for each connection, whereby the data is transmitted from the transceiver corresponding to the transfer path.

Here, FIG. 12 (e) shows one data configuration example of connection management table 532. As shown in FIG. 12 (e), a connection (e.g., "connection 1") is stored in association with a transfer path (e.g., "IPsec transfer path and PMIP transfer path". This connection management table 532 is synchronized with connection management table 332 of UE 12 and connection management table 432 of PGW 22 so that same data is stored.

When having received a packet to UE 12 from PGW 22, GW 70 solves the IPsec transfer path from connectionmanagement table 532 and transmits the packet to UE 12. When having received a packet transmitted by UE 12 via the IPsec transfer path, GW 70 solves the PMIP transfer path from connection management table 532 and transmits the packet to PGW 22.

IPsec processor 540 is a functional part that executes a process for establishing a transfer path based on IPsec as the communication with UE 12.

PMIPv6 processor 550 is a functional part for establishing a transfer path based on PMIPv6 as the communication with PGW 22. Packet transceiver 560 is a functional part for transmitting and receiving specific data (packets).

### [2.3. Communication Path Establishment Procedure]

Next, in the network shown in FIG. 10, the procedure of establishing a communication path for UE 12 will be described. Herein, the communication path establishment procedure of UE 12 for connecting to the core network via access network A is almost the same as the communication path establishment procedure explained in the first embodiment, so that detailed description is omitted.

The difference of the communication path establishment procedure of the present embodiment is that in the first embodiment UE 10 and PGW 20 perform the position register procedure based on DSMIPv6 ((2) and (3) in FIG. 6) after completion of the attach procedure at (1) in FIG. 6 and establishment of the default EPS bearer (EPS bearer 1) whereas in the present embodiment SGW 30 and PGW 22 perform the position register procedure based on PMIPv6 after completion of the attach procedure at (1) in FIG. 6 and establishment of the default EPS bearer (EPS bearer 1).

### [2.4. Handover Procedure]

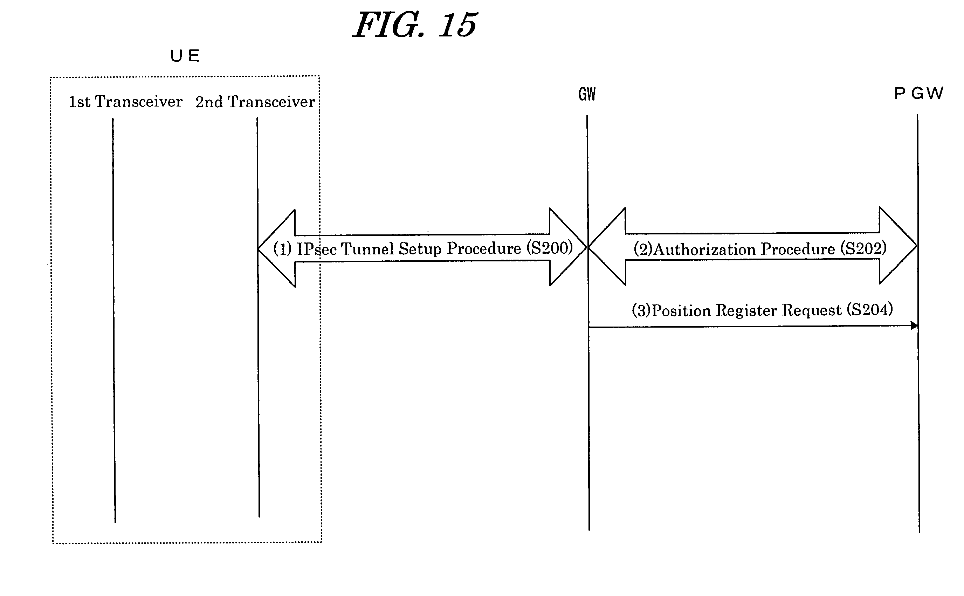

Subsequently, the procedure of a case where communication of UE 12 is handed over from access network A to access network B will be described with reference to the drawings. In this case, in order to connect to access network B, UE 12 transmits and receives control information using second transceiver 120 to achieve the procedure. Description will be made first with reference to FIG. 15.

(1) UE 12 performs an IPsec tunnel setup procedure via access network B (S200).

Specifically, UE 12 takes the lead in performing a procedure of setting up an IPsec tunnel in cooperation with GW 70. The setup of the IPsec tunnel is performed based on a key exchange procedure such as IKEv2 or the like, which has been conventionally used for an IPsec tunnel setup procedure. GW 70 that sets up an IPsec tunnel with UE 12 is an apparatus inside the core network that connects access network B with the core network. UE 12 detects GW 70 by using a DNS service or the like.

Further, in this procedure, UE 12 transmits a message included with an access point name (APN) for identifying PGW 22 to be connected to, to GW 70.

(2) GW 70 performs authorization procedure (access permission procedure) for UE 12 with PGW 22 to which UE 12 makes a request for connection by the time IPsec tunnel establishment is completed (S202). The authorization and access permission procedures are performed by PGW 22 or GW 70, using the profiles such as the identification information of UE 12, the subscriber data, etc., in accordance with the operator's policy.

(3) When UE 12 has been authorized and permitted to access, GW 70 transmits a position register request defined by PMIPv6 to PGW 22 (S204). The transmitted message herein includes the identification information on UE 12, HoA of UE 12 and the GW 70's address as positional information.

PGW 22 having received the position register request determines the feasibility of handover and transmits a position register response to UE 12. The determination of handover feasibility is performed by the handover feasibility decision process shown in FIG. 8, for example, similarly to the first embodiment.

When PGW 22 checks the presence of a handover policy and there is a handover policy (Step S12; Yes), PGW 22 checks whether the communication of the connection for which handover is requested includes a communication prohibited from being handed off, and whether the prohibited communication is being performed (Step S14). For example, when handover of connection 1 is requested, PGW 22 refers to the communication for which handover is prohibited in handover policy management table 234, and resultantly detects the fact that an emergency call is prohibited and also determines whether communication of an emergency call is in progress.

In order to determine whether communication of an emergency call is being engaged, it is possible to confirm that communication of an emergency call is being engaged by monitoring the actual traffic based on the flow identification information that identifies an emergency call, or it is also possible to check the fact that the EPS bearer for an emergency call (EPS bearer 2) has been established. Without regard to an emergency call, it is also possible to determine whether communication of a flow to be prohibited from being handed off is being performed, using the same technique.

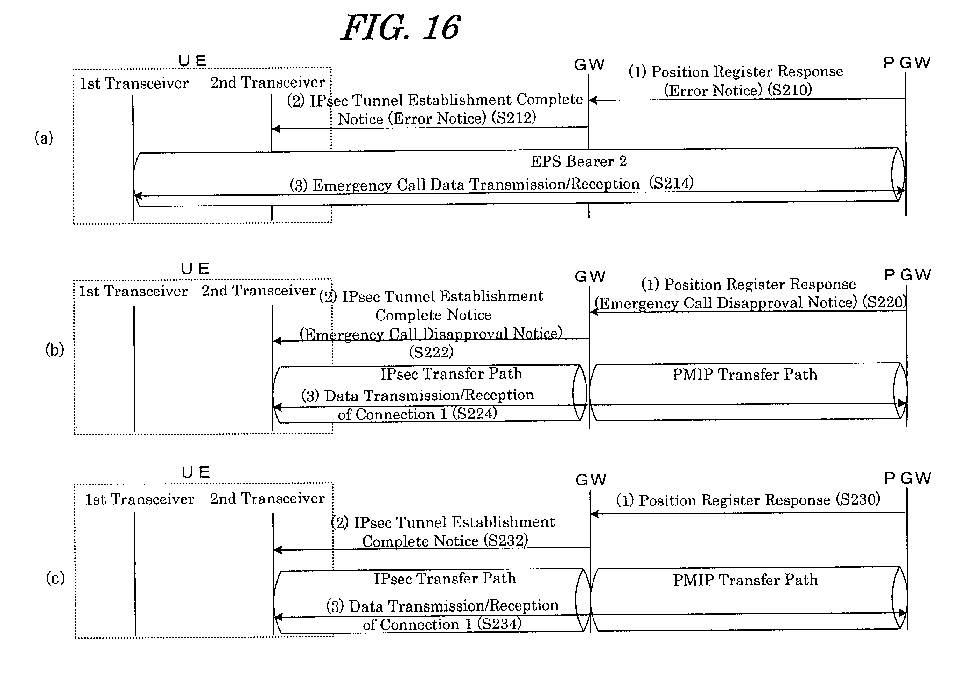

Here, the procedures effected at Steps S16, S18 and S20 of the handover feasibility decision process (FIG. 8) will be described using FIG. 16.

### (a) The procedure at Step S16

First, the procedure at Step S16 (the procedure of giving notice of rejection of handover) will be described using FIG. 16(a).

(a-1) PGW 22 transmits a position register response to GW 70 to notify rejection of handover (S210). Since the request is a handover request for a connection including a communication prohibited from being handed off, an "error notice" that means rejection of handover is added as an information factor in the position register response.

(a-2) When receiving the position register response, GW 70 transmits an IPsec tunnel complete notice to UE 12 (S212) . At this time, when detecting the error notice that indicates rejection of handover, from the position register response, the GW determines that it is impossible to establish an IPsec tunnel and gives an error notice that indicates rejection of handover.

(a-3) As UE 12 receives the IPsec tunnel complete notice indicating the error notice, UE 12 and PGW 22 continue communication (data transmission and reception) through the EPS bearer before a handover request is made (S214). For example, communication of an emergency call is continued using EPS bearer 2 as the transfer path while the other communication is continued through EPS bearer 1 or another EPS bearer.

### (b) The procedure at Step S18

Next, the procedure at Step S18 (the procedure of giving notice of communications for which handover is permitted and for which handover is prohibited) will be described using FIG. 16(b).

(b-1) PGW 22 transmits a position register response for notice of permission to GW 70 (S220). As an information factor in the position register response, information on the communication to be prohibited from being handed off is added. For example, it is notified that communication of an emergency call will not be allowed through the PMIP transfer path from this time on. By this procedure, a PMIP transfer path is established between GW 70 and PGW 22.

(b-2) GW 70 receives the position register response from PGW 22, confirmed that handover of all the communications of connection 1 is permitted, and transmits an IPsec tunnel establishment complete notice to UE 12 (S222). Here, this IPsec tunnel establishment complete notice is added with information on communication (e.g., emergency call) for which handover is prohibited. Thus, a PMIP transfer path is established between UE 12 and GW 70.

(b-3) UE 12 and PGW 22 continue communication (data transmission and reception) by switching the transfer path of communication of connection 1 to the IPsec transfer path and the DSMIP transfer path (S224). UE 12 and PGW 70 are connected by the IPsec transfer path between UE 12 and GW 70 and the PMIP transfer path between GW 70 and PGW 22.

### (c) The procedure at Step S20

Next, the procedure (the procedure for permitting handover) at Step S20 will be described using FIG. 16(c).

(c-1) PGW 22 transmits a position register response to GW 70 (S230). This position register response indicates that handover will be permitted for all the communications of connection 1 as has been done conventionally. Further, this establishes a PMIP transfer path between GW 70 and PGW 22.

(c-2) GW 70 receives the position register response from PGW 22, confirms that handover of all the communications of connection 1 is permitted, and transmits an IPsec tunnel establishment complete notice to UE 12 (S232). Here, this IPsec tunnel establishment complete notice notifies that handover of all the communications of connection 1 should be permitted. Further, this establishes an IPsec transfer path between UE 12 and GW 70.

(c-3) UE 12 and PGW 22 continue communication (data transmission and reception) by switching the transfer path of the communication of connection 1 to the IPsec transfer path and the PMIP transfer path (S234). UE 12 and PGW 22 are connected by the IPsec transfer path between UE 12 and GW 70 and the PMIP transfer path between GW 70 and PGW 22.

Along with this, connection management table 332 of UE 12 is updated so that the transfer path with GW 70 is associated with "IPsec transfer path" as shown in FIG. 12 (c). Connection management table 432 of PGW 22 is updated so that the transfer path with GW 70 is associated with "PMIP transfer path" as shown in FIG. 12(d).

Further, in connection management table 532 of GW 70, connection 1 is managed in association with "IPsec transfer path and PMIP transfer path" as shown in FIG. 12(e). GW 70 receives packets transmitted by UE 12 through the IPsec transfer path and transmits the packets to the PMIP transfer path, by reference to connection management table 532. Further, GW 70 receives packets transmitted from PGW 22 and addressed to UE 12 through the PMIP transfer path and transmits the packets to the IPsec transfer path by reference to connection management table 532.

Here, when UE 12 starts communication that is prohibited from being handed off from this time on, the UE will not make a request for communication using the IPsec transfer path. The UE performs communication in a procedure that does not use the IPsec transfer path and the PMIP transfer path, by such a means as to establish another new connection via access network A.

As described above, even when emergency calls are prohibited in the access network to which handover is performed, handover of general calls other than emergency call communication is made possible, though in the conventional handover, it was only possible to reject the handover of all the connections including general calls. Further, determination of handover can be made based on the operator' s policy inside the core network.

With the arrangement, by applying the operator's policy to the management apparatus in the core network, it become possible to make such operation that communication for emergency calls will be performed through access network A alone. This configuration is able to deal with the policy of an operator who schemes such operation as to have the communication for emergency calls performed via access network A and have the communication via access network B used for communication for general calls other than emergency calls, even though the communication path via access network B can, indeed, keep the quality for emergency call communication and permit handover from the communication path via access network A.

That is, the network operator is able to control handover permission/permission for every flow or every bearer, in response to handover requests from UEs, in accordance with the operator's policy depending on the communication conditions within the network.

Though the present embodiment was described by assuming an emergency call as a specific communication to be prohibited from being handed off, the operator can define the specific communication in any form, not limited to the above. Further, the specific communication for which handover is prohibited is not limited to a single kind, but multiple kinds of communication can be specified.

### [3. The Third Embodiment]

Next, the third embodiment of a mobile communication system to which the present invention is applied will be described in detail using diagrams.

### [3.1 Network Configuration]

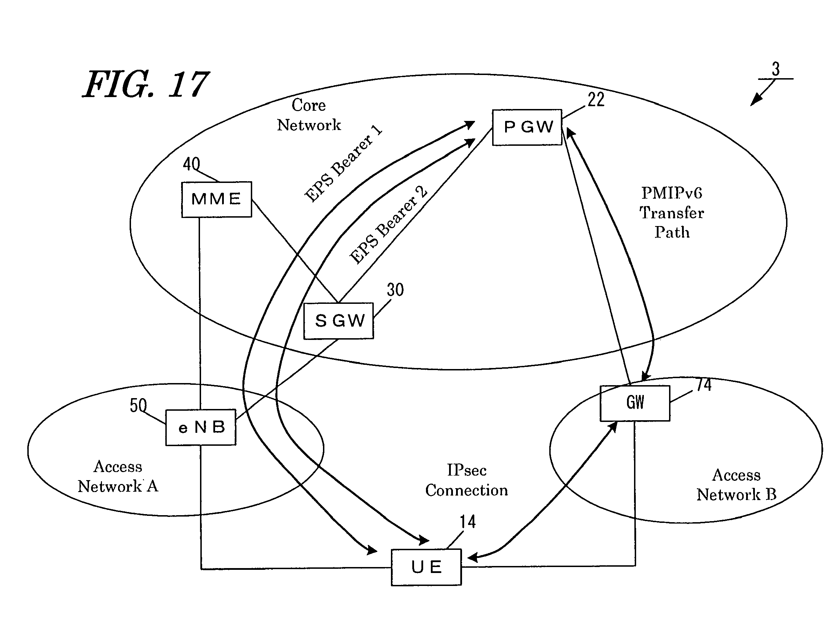

First, the network configuration in the present embodiment will be described with reference to FIG. 17. A mobile communication system 3 in FIG. 17 has a configuration in which UE 12 and GW 70 in the network configuration of the second embodiment is replaced by a UE 14 and a GW 74, respectively. The difference from the second embodiment is that GW 70 that connects access network B with the core network in the second embodiment is an apparatus inside the core network whereas GW 74 in the present embodiment is an apparatus inside access network B.

This is based on the difference in operating style between operators. The second embodiment is a case in which the core network operator is different from the operator of access network B while there is no relationship of mutual confidence between the two. Specifically, a case in which use of the UE authorizing function provided inside the core network is not permitted corresponds to this case. Therefore, if a UE connects to the core network via access network B, it is necessary for the UE to connect to the core network using a security function such as IPsec or the like.

On the other hand, the present embodiment, differing from the second embodiment, corresponds to a case where the core network operator and the operator of the access network are the same or have a relationship of mutual confidence between them. Specifically, a case in which use of the UE authorizing function provided inside the core network is permitted.

First, a UE 14 (mobile station: User Equipment) is connected to the core network via a plurality of radio access networks. Access network A includes a base station (eNB 50) to which UE 14 connects and is connected to the core network via a gateway (SGW 30).

The core network is installed with a GW (PGW 22) that forwards communication data transmitted from other mobile stations to a mobile station and is connected to SGW 30. Further, the core network is installed with a management apparatus (MME 40) that receives a request for transfer path establishment from UE 14 and takes control of the procedure for establishing a bearer (EPS bearer) as a transfer path between UE 14 and PGW 22 via eNB 50 and SGW 30. The EPS bearer is a QoS-supporting transfer path between UE 14 and PGW 22 by way of access network A.

Access network B is connected to the core network via a GW 74. Here, GW 74 that connects access network B with the core network is an apparatus inside access network B. Since there is a relationship of mutual confidence between the operators, GW 74 can connect to PGW 22 that is located inside the core network. UE 14 is connected with PGW 22 by the radio link established to connect to access network B and the transfer path established between GW 74 and PGW 22 based on PMIPv6, without the necessity of establishing a transfer path to be established between UE 14 and GW 74 based on IPsec.

As above, in the mobile communication system using packet communication in the present embodiment, UE 14 is connected to the core network by the transfer path of the bearer that supports QoS via access network A and by the radio link and the transfer path based on PMIPv6 via access network B.

### [3.2. Equipment Configurations]

Subsequently, each apparatus configuration will be briefly described with reference to the drawings. Here, SGW 30, MME 40 and eNB 50 have the same configurations as those of the conventional equipment in SAE and PGW 22 has the same configuration as the apparatus of the second embodiment so that detailed description is omitted.

### [3.2.1 UE Configuration]

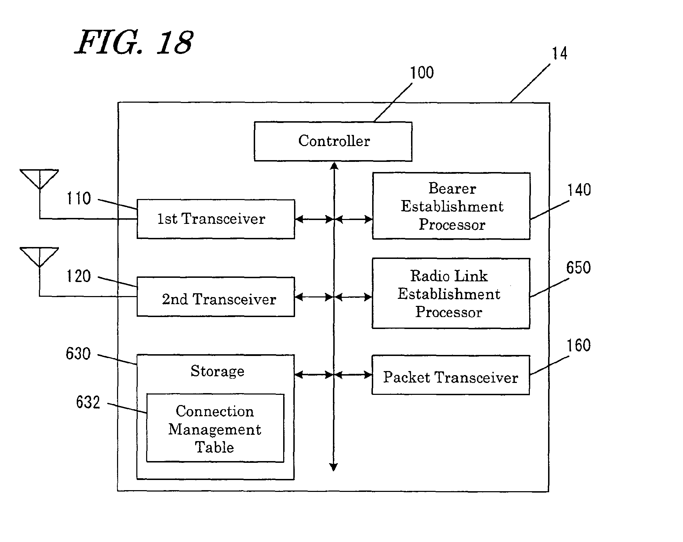

First, the configuration of UE 14 as a mobile station will be described using a block diagram in FIG. 18. Here, as a specific example of the UE, a terminal such as mobile terminal, PDA or the like, which simultaneously connects to the core network via a plurality of access networks, is supposed. Here, in UE 14 in FIG. 18, the same components as those in UE 12 in FIG. 11 are allotted with the same reference numerals, and description of the functional parts allotted with the same reference numerals is omitted.

As shown in FIG. 18, UE 14 includes a controller 100, to which a first transceiver 110, a second transceiver 120, a storage 630, a bearer establishment processor 140, a radio link establishment processor 650 and a packet transceiver 160 are connected.

Storage 630 is a functional unit for storing programs, data, etc., necessary for UE 14 to perform various kinds of operations. Storage 630 further stores a connection management table 632 for storing connections in association with transfer paths for transmission.

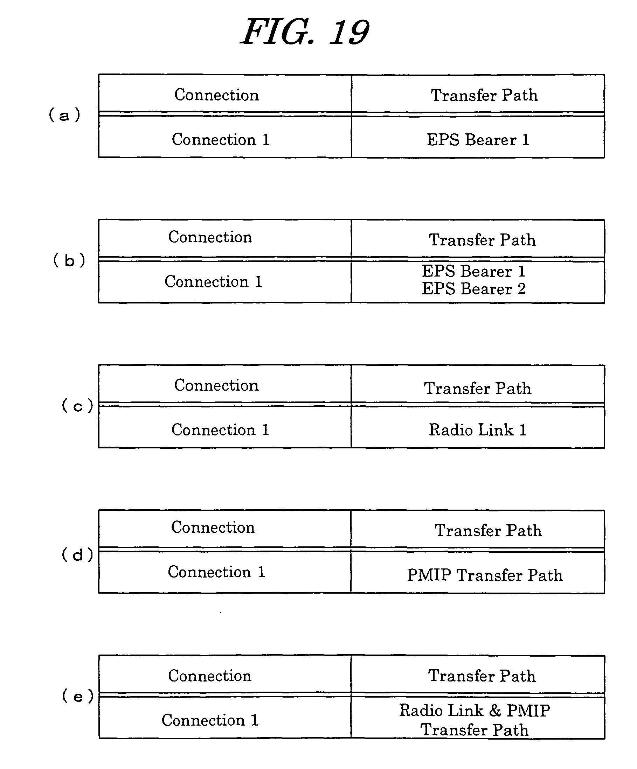

Here, FIG. 19 (a) shows one data configuration example of connection management table 632. As shown in FIG. 19(a), a connection (e.g., "connection 1) " is stored in association with a transfer path (e.g., "EPS bearer 1").

Radio link establishment processor 650 is a functional part for establishing a radio communication path that connects to the core network via access network B.

### [3.2.2 GW Configuration]

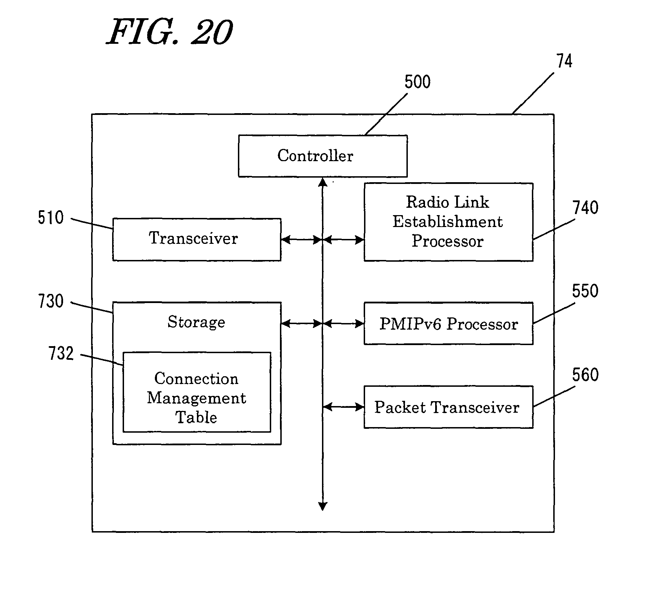

Next, the configuration of GW 74 in the present embodiment will be described based on FIG. 20. Here, in GW 74 in FIG. 20, the same components as those in GW 70 in FIG. 14 are allotted with the same reference numerals, and description of the functional parts allotted with the same reference numerals is omitted.

GW 74 includes a controller 500, to which a transceiver 510, a storage 730, a radio link establishment processor 740, a PMIPv6 processor 550 and a packet transceiver 560 are connected.

Storage 730 is a functional unit for storing programs, data, etc., necessary for GW 74 to execute various operations. Storage 730 further stores a connection management table 732 for storing connections in association with transfer paths for transmission.

Here, FIG. 19 (e) shows one data configuration example of the connection management table. As shown in FIG. 19(e), a connection (e.g., "connection 1") is stored in association with a transfer path (e.g., "radio link and PMIP transfer path"). When having received a packet address to UE 14 from PGW 22, GW 74 solves the radio link from connection management table 732 and transmits the packet to UE 14. When having received a packet transmitted by UE 14, GW 74 solves the PMIP transfer path from connection management table 732 and transmits the packet to PGW 22.

Radio link establishment processor 740 is a functional part that executes a process of establishing a radio communication path for UE 14 to connect to access network B and perform communication.

### [3.3. Communication Path Establishment Procedure]

In the network shown in FIG. 17, the communication path establishment procedure of UE 14 for connecting to the core network via access network A is the same as the communication path establishment procedure explained in the second embodiment, so that detailed description is omitted.

### [3.4. Handover Procedure]

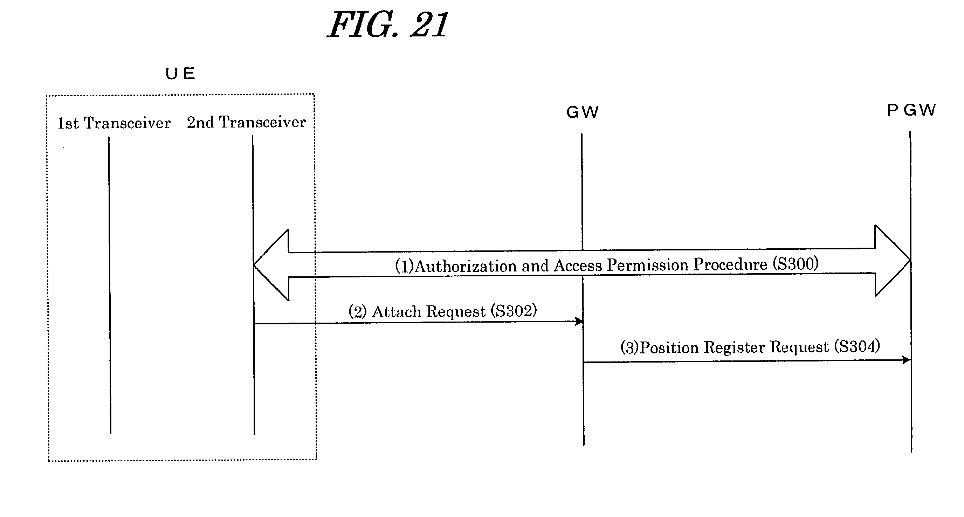

Subsequently, the procedure of a case where UE 14 hands over connection 1 from access network A to access network B will be described with reference to the drawings. In this case, UE 14 uses second transceiver 120 connecting to access network B to transmit and receive control information to achieve the procedure. This aspect will be described with reference to FIG. 21.

(1) UE 14 detects the possibility of radio connection to access network B and performs procedures of authorization and access permission for connection (S300).

The authorization and access permission procedures are performed between UE 14, GW 74 and an authorizing apparatus (e.g., PGW 22) in the core network, using the profiles such as the identification information of the UE, the subscriber data, etc., based on the operator's policy.

GW 74 that establishes a radio link with UE 14 is an apparatus inside access network B that connects access network B with the core network. UE 14 detects GW 74 by using a DNS service or the like.

Further, in this procedure, UE 14 transmits a message included with an access point name (APN) for identifying the PGW 22 to be connected to.

(2) When UE 14 has been authorized and permitted to access, UE 14 transmits an attach request to GW 74 (S302). The attach request that UE 14 transmits includes an access point name (APN) for identifying the PGW to be connected to.

(3) GW 74 having received the attach request transmits a position register request defined by PMIPv6 to PGW 22 (S304). The message includes the identification information on UE 14, HoA of UE 14 and the GW 74's address as positional information.

Here, if UE 14 has been authorized and permitted to access, it is not always necessary for UE 14 to transmit an attach request as in S302. In this case, when GW 74 detects the fact that the authorization and access permission procedures at S300 have been completed, the GW 74 transmits a position register request defined by PMIPv6 to PGW 22.

PGW 22 having received the position register request decides the feasibility of handover and transmits a position register response to UE 14. The decision of handover feasibility is made by the handover feasibility decision process shown in FIG. 8, for example, similarly to the second embodiment.

When PGW 22 checks the presence of a handover policy and there is a handover policy (Step S12; Yes), PGW 22 checks whether the communication of the connection for which handover is requested includes a communication prohibited from being handed off, and whether the prohibited communication is being performed (Step S14). For example, when handover of connection 1 is requested, PGW 22 refers to the communication for which handover is prohibited in handover policy management table 234, and resultantly detects the fact that an emergency call is prohibited and also determines whether communication of an emergency call is in progress.

In order to determine whether communication of an emergency call is being engaged, it is possible to confirm that communication of an emergency call is being engaged by monitoring the actual traffic based on the flow identification information that identifies an emergency call, or it is also possible to check the fact that the EPS bearer for an emergency call (EPS bearer 2) has been established. Without regard to an emergency call, it is also possible to determine whether communication of a flow to be prohibited from being handed off is being performed, using the same technique.

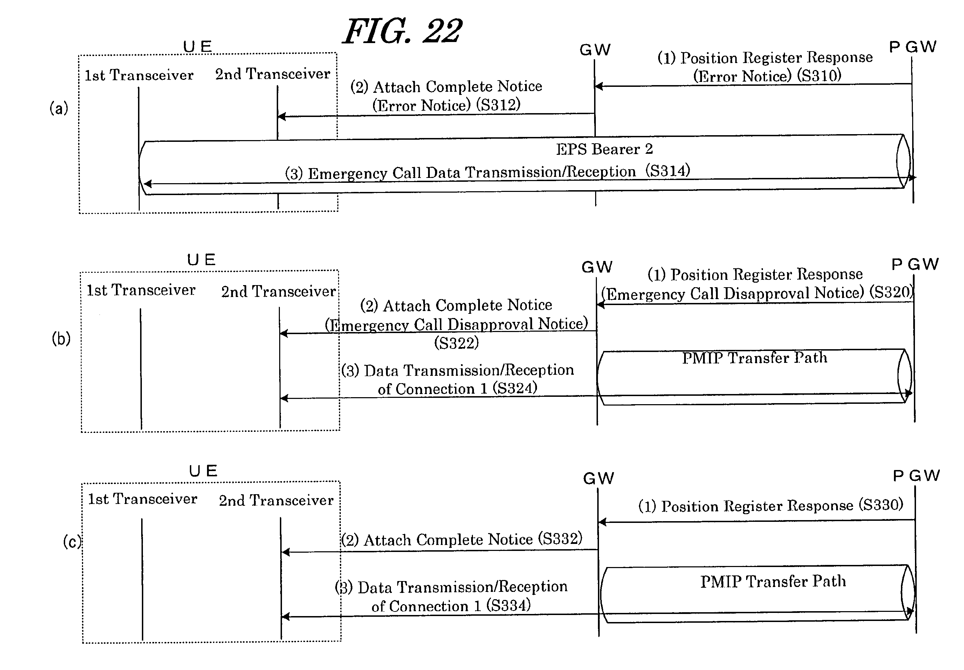

Here, the procedures effected at Steps S16, S18 and S20 in FIG. 8 will be described using FIG. 22.

### (a) The procedure at Step S16

First, the procedure at Step S16 (the procedure of giving notice of rejection of handover) will be described using FIG. 22(a).

(a-1) PGW 22 transmits a position register response to GW 74 to notify rejection of handover (S310). Since the request is a handover request for a connection including a communication prohibited from being handed off, an error notice that means rejection of handover is added as an information factor in the position register response.

(a-2) When receiving the position register response, GW 74 transmits an attach complete notice to UE 14 (S312). At this time, when detecting the error notice that indicates rejection of handover, the GW determines that it is impossible to establish a radio link and gives an error notice that indicates rejection of handover.

(a-3) As UE 14 receives the attach complete notice indicating the error notice, UE 14 and PGW 22 continue communication (data transmission and reception) through the EPS bearer before a handover request is made (S314). For example, communication of an emergency call is continued using EPS bearer 2 as the transfer path while the other communication is continued through EPS bearer 1 or another EPS bearer.

### (b) The procedure at Step S18

Next, the procedure at Step S18 (the procedure of giving notice of communications for which handover is permitted and for which handover is prohibited) will be described using FIG. 22(b).

(b-1) PGW 22 transmits a position register response for notice of permission to GW 74 (S320). As an information factor in the position register response, information on the communication to be prohibited from being handed off is added. For example, it is notified that communication of an emergency call will not be allowed through the PMIP transfer path from this time on. By this procedure, a PMIP transfer path is established between GW 74 and PGW 22.

(b-2) GW 74 receives the position register response from PGW 22, confirmed that handover of all the communications of connection 1 is permitted, and transmits an attach complete notice to UE 14 (S322). Here, this attach complete notice is added with information on communication for which handover is prohibited. Further, a radio link is established between UE 14 and GW 74.

(b-3) UE 14 and PGW 22 continue communication of connection 1 by switching the communication path to the radio link and the DSMIP transfer path (S324). UE 14 and PGW 22 are connected by the radio link between UE 14 and GW 74 and the PMIP transfer path between GW 74 and PGW 22.

Along with this, in connection management table 632 of UE 14 the transfer path with GW 74 is updated to "radio link 1", as shown in FIG. 19(c). Also, in connection management table 432 of PGW 22 the transfer path with GW 74 is updated to "PMIP transfer path", as shown in FIG. 19(d). Further, in connection management table 732 of GW 74, connection1 is managed in association with the radio link and PMIP transfer path, as shown in FIG. 19(e).

GW 74 receives packets sent by UE 14 through the radio link and transmits the packets to the PMIP transfer path by reference to connection management table 732. Further, GW 74 receives packets transmitted from PGW 22 and addressed to UE 14 through the PMIP transfer path and transmits the packets to the radio link by reference to connectionmanagement table 732.

Here, when UE 14 starts communication that is prohibited from being handed off from this time on, the UE will not make a request for communication using the radio link. The UE performs communication in a procedure that does not use the radio link and the PMIP transfer path, by such a means as to establish another new connection via access network A.

### (c) The procedure at Step S20

Next, the procedure (the procedure for permitting handover) at Step S20 will be described using FIG. 22(c).

(c-1) PGW 22 transmits a position register response to GW 74 (S330). This position register response indicates that handover will be permitted for all the communications of connection 1 as has been done conventionally. Further, this establishes a PMIP transfer path between GW 74 and PGW 22.

(c-2) GW 74 receives the position register response from PGW 22, confirms that handover of all the communications of connection 1 is permitted, and transmits an attach complete notice to UE 14 (S332). Here, this attach complete notice notifies that handover of all the communications of connection 1 should be permitted. Further, this establishes a radio link between UE 14 and GW 74.

(c-3) UE 14 and PGW 22 continue communication (data transmission and reception) by switching the transfer path of the communication of connection 1 to the radio link and the PMIP transfer path (S334). UE 14 and PGW 22 are connected by the radio link between UE 14 and GW 74 and the PMIP transfer path between GW 74 and PGW 22.

Along with this, connection management table 632 of UE 14 is updated so that the transfer path with GW 74 is associated with "radio link 1" as shown in FIG. 19(c). Connection management table 432 of PGW 22 is updated so that the transfer path with GW 74 is associated with "PMIP transfer path" as shown in FIG. 19(d).

Further, in connection management table 732 of GW 74, connection 1 is managed in association with "radio link and PMIP transfer path" as shown in FIG. 19(e). GW 74 receives packets transmitted by UE 14 through the radio link and transmits the packets to the PMIP transfer path, by reference to connection management table 732. Further, GW 74 receives packets transmitted from PGW 22 and addressed to UE 14 through the PMIP transfer path and transmits the packets to the radio link by reference to connection management table 732.

As described above, even when emergency calls are prohibited in the access network to which handover is performed, handover of general calls other than emergency call communication is made possible, though in the conventional handover, it was only possible to reject the handover of all the connections including general calls. Further, determination of handover can be made based on the operator' s policy inside the core network.

With the arrangement, by applying the operator's policy to the management apparatus in the core network, it become possible to make such operation that communication for emergency calls will be performed through access network A alone. This configuration is able to deal with the policy of an operator who schemes such operation as to have the communication for emergency calls performed via access network A and have the communication via access network B used for communication for general calls other than emergency calls, even though the communication path via access network B can, indeed, keep the quality for emergency call communication and permit handover from the communication path via access network A.

That is, the network operator is able to control handover permission/permission for every flow or every bearer, in response to handover requests from UEs, in accordance with the operator's policy depending on the communication conditions within the network.

Though the present embodiment was described by assuming an emergency call as a specific communication to be prohibited from being handed off, the operator can define the specific communication in any form, not limited to the above. Further, the specific communication for which handover is prohibited is not limited to a single kind, but multiple kinds of communication can be specified.

### [4. Variational Example]

As the embodiment of this invention has been described in detail with reference to the drawings, the specific configuration should not be limited to the embodiment. Designs and others that do not depart from the gist of this invention should also be included in the scope of claims.

The program to be operated in each apparatus in each of the embodiments is a program (program that makes a computer function) for controlling a CPU or the like so as to realize the functions of the above-described embodiment mode. The data to be handed in these apparatus is temporarily stored in a temporary storage device (e.g., RAM) at the time of processing, then is stored into ROM, HDD and/or storage devices and is read out, modified and written in by the CPU, as necessary.

Herein, the recording medium for storing program may be any of semiconductor mediums (e.g., ROM, non-volatile memory card,etc.),opticalrecording mediums/magneto optical recording mediums (e.g., DVD (Digital Versatile Disc), MO (Magneto Optical Disc), MD (Mini Disc), CD (Compact Disc), BD and the like). Alternatively, the functions of the above-described embodiment mode are realized by executing the loaded program, but in accordance with the directions of the program, the functions of the present invention may also be realized by cooperating with the operating system, another application program or the like.

To put the product on the market, the program may be stored on a storing medium, or may be transferred to a server computer connected to a network such as the Internet or the like. In this case, the storage device of the server computer is of course included in the present invention.

Further, the whole or part of each apparatus in the above-described embodiment may be typically realized by an LSI (Large Scale Integration) as an integrated circuit. Each functional block of each apparatus may be separately given in the form of a chip, or the whole or part of the blocks may be integrated into a chip. The circuit integration may be realized in the form of a dedicated circuit or general purpose processor, not limited to LSI. It goes without saying that if a technique of circuit integration replacing LSI technologies with the progress of semiconductor technologies appears, the technology of the integrated circuit can be used.

### Description of Reference Numerals

- 10, 12,: 14UE
- 100: controller
- 110: first transceiver
- 120: second transceiver
- 130, 330, 630: storage
- 132, 332, 632: connection management table
- 140: bearer establishment processor
- 150: DSMIPv6 processor
- 160: packet transceiver
- 350: IPsec processor
- 650: radio link establishment processor
- 20, 22: PGW
- 200: controller
- 210: transceiver
- 230, 430: storage
- 232, 432: connection management table
- 234: handover policy management table
- 240: bearer establishment processor
- 250: DSMIPv6 processor
- 260: packet transceiver
- 450: PMIPv6 processor
- 30: SGW
- 40: MME
- 50: eNB
- 60: AR
- 70, 74: GW
- 500: controller
- 510: transceiver
- 532, 732: connection management table
- 540: IPsec processor
- 550: PMIPv6 transceiver
- 560: packet transceiver
- 740: radio link establishment processor

## Claims

1. A control station apparatus which is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, comprising:
a handover determining means for determining whether the communication with the mobile station apparatus includes a flow for which handover of the transfer path is prohibited; and,
a position register request receiving means for receiving a position register request for performing communication via the transfer path of the second access network, from the mobile station apparatus, wherein
when the handover determining means determines that the communication requested by the position register request includes a flow for which handover of the transfer path is prohibited, communication with the mobile station apparatus is continued through the first access network.

2. The control station apparatus according to Claim 1, further comprising a position register response transmitting means for transmitting a position register response that indicates a feasibility of position registering, to the mobile station apparatus, based on the position register request received by the position register request receiving means, wherein the position register response includes information that prohibition of handover of transfer path has been decided by the handover determining means.

3. The control station apparatus according to Claim 2, wherein when the handover determining means determines that the communication requested by the position register request does not include any flow for which handover of the transfer path is prohibited, communication is switched to the second access network, and
the position register response includes information on a flow for which handover of transfer path is prohibited by the handover determining means.

4. Amobile station apparatus connectable to, a first access network in which a bearer transfer path that guarantees a predetermined QoS has been established, and a second access network in which a transfer path different from the first access network has been established, and set with a path for performing communication of a plurality of flows with a control station by way of the transfer path of the first access network, comprising:
a position register request transmitting means for transmitting a position register request for performing communication via the transfer path of the second access network;
a position register response receiving means for receiving a position register response that indicates a feasibility of position registering, based on the position register request, from the control station apparatus; and,
a transfer path switching means for switching the transfer path of the communication with the control station apparatus, based on the position register response received by the position register response receiving means, wherein
the transfer path switching means continues communication by way of the first access network when the position register response includes information that handover of transfer path is prohibited.

5. A gateway apparatus which connects a mobile station apparatus connectable to, a first access network in which a bearer transfer path that guarantees a predetermined QoS has been established, and a second access network in which a transfer path different from the first access network has been established, with a control station apparatus which is set with a path for performing communication of a plurality of flows with the mobile station apparatus byway of the transfer path of the first access network, by way of the transfer path of the second access network, comprising:
a position register response receiving means for receiving a position register response that includes information that prohibition of handover of transfer path has been decided, from the control station apparatus; and,
a position register response transmitting means for transmitting the position register response to the mobile station apparatus, by way of the transfer path of the second access network.

6. A mobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, and
the control station apparatus comprising:
a handover determining means for determining whether the communication with the mobile station apparatus includes a flow for which handover of the transfer path is prohibited; and,
a position register request receiving means for receiving a position register request for performing communication via the transfer path of the second access network, from the mobile station apparatus,
wherein when the handover determining means determines that the communication requested by the position register request includes a flow for which handover of the transfer path is prohibited, communication with the mobile station apparatus is continued through the first access network.

7. A communication method in a mobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, wherein
the control station apparatus determines whether the communication with the mobile station apparatus includes a flow for which handover of the transfer path is prohibited,
receives a position register request for performing communication via the transfer path of the second access network, from the mobile station apparatus, and
continues communication with the mobile station apparatus through the first access network when it has been determined that the communication requested by the position register request includes a flow for which handover of the transfer path is prohibited.
